# EUROPÄISCHE PATENTSCHRIFT

(11) **EP 1 020 575 B1**
(45) Veröffentlichungstag und Bekanntmachung des Hinweises auf die Patenterteilung: **09.04.2003**
(21) Anmeldenummer: 00100304.5
(22) Anmeldetag: 07.01.2000
(51) Int. Cl.: E04B 2/96, E04D 3/08

(54) **T-Verbindung zwischen einem Sprossen- und einem Pfostenprofil einer Fasade oder eines Lichtdaches**
T-connection between a mullion profile and a transom profile of a fassade or a glazed roof
Connection en T entre un poteau et une traverse profilés d'une façade ou d'une toiture vitrée

(30) Priorität: 18.01.1999 DE 19901775
(43) Veröffentlichungstag der Anmeldung: 19.07.2000
(73) Patentinhaber: SCHÜCO International KG, 33609 Bielefeld (DE)
(72) Erfinder: Steege, Dieter, 32107 Bad Salzuflen (DE)
(74) Vertreter: Specht, Peter, Dipl.-Phys.

(56) Entgegenhaltungen:
- DE-U- 29 910 027
- GB-A- 2 134 205
- US-A- 3 797 191
- US-A- 4 683 693

## Beschreibung

Die Erfindung bezieht sich auf eine T-Verbindung zwischen einem Sprossen- und einem Pfostenprofil einer Fassade oder eines Lichtdaches nach dem Oberbegriff des Anspruchs 1.

Es ist eine T-Verbindung dieser Art bekannt (siehe des gattungsgemäße DE 38 09 951 A1), bei der der Verbinderkörper aus einem U-förmigen, stranggepreßten Leichtmetallprofil besteht, das sich über den gesamten Querschnitt der Innenkammer erstreckt. Zwischen den plattenförmigen Schenkeln des Verbinderkörpers ist ein kniehebelartig ausgebildeter Brückensteg vorgesehen, der mit einer Gewindebohrung für eine sich mit ihrem Kopf an der Stirnwand des Verbinderkörpers abstützenden Spannschraube ausgerüstet ist. Der Brückensteg setzt sich aus einem mittleren Stegteil und mit den Schenkeln verbundenen unter einem stumpfen Winkel zu den Schenkeln verlaufenden Stegteilen zusammen, wobei die Gewindebohrung für die Spannschraube im mittleren Stegteil angeordnet ist. Durch das Anziehen der Spannschraube werden nach dem Einsetzen des Verbinderkörpers in das Stirnende des Sprossenprofils die mit einem Klebstoff belegten Schenkel an die zugeordneten Innenflächen des Sprossenprofils gepreßt, so daß beim Abbinden des Klebers eine einwandfreie Verbindung zwischen den plattenförmigen Schenkeln des Verbinderkörpers und dem Sprossenprofil entsteht.

Da das vordere Ende des Bundbolzens mit einer Rastausnehmung ausgerüstet ist, kann der durch die Bohrung in die Innenkammer des Pfostenprofils eingeführte Bundbolzen in seiner Rastausnehmung einen Teil des Bohrungsrandes aufnehmen, so daß sich eine formschlüssige Verbindung zwischen dem Bundbolzen und dem Pfostenprofil ergibt.

Der Bundbolzen der bekannten Ausführung stützt sich an einer Feder ab, so daß der Bundbolzen entgegen der Wirkung der Feder in den Verbinderkörper eingefahren werden kann, sofern eine Sprosse zwischen zwei montierten Pfostenprofilen eingesetzt werden soll.

Nachteilig bei der bekannten Konstruktion ist, daß der Verbinder sich über den gesamten Querschnitt der Innenkammer des Sprossenprofils erstreckt, so daß für Sprossenprofile mit unterschiedlichen Bauhöhen jeweils ein entsprechend ausgebildeter Verbinder erforderlich ist.

Die GB 2 134 205 A betrifft eine stumpfe Rahmenverbindung für Fenster oder Türen, wobei die einzelnen Rahmenteile der Außen- und Innenfläche bündig zueinander fixiert sind. Ein Rahmenholm wird stumpf geschnitten, an den weiteren Rahmenholm angesetzt und mittels Verbindern, die in Nuten der Hohlkammern des Rahmenholms gelagert sind, zusammengefügt.

Der Verbinder weist aufeinander zulaufende Gewindebohrungen auf, über die mittels Schrauben die Stoßverbindung dauerhaft gesichert wird. Dies wird dazu genutzt, den Rahmen für Fenster um das Füllungselement herumzubauen und so auf eine zusätzliche Glashalteleiste verzichten zu können. Dabei erfolgt die eigentliche Festlegung des Verbinders an Wandungen, die senkrecht zu Scheibenebene verlaufen. Fassaden oder T-förmige Verbindungen werden in dieser Schrift nicht angesprochen.

Die US 3 797 191 zeigt eine Fassadenkonstruktion, bei welcher die Riegel stirnseitig stumpf geschnitten an den Pfostenseitenflächen anliegend mit dem Pfostenprofil verbunden sind. Hierbei bildet der Glasanlagebereich eine bündige Ebene. Nahe des Glasanlagebereiches ist eine Schraubnut angeordnet, in die ein Schraubbolzen eingesetzt ist. Der Kopf des Schraubbolzens ist dabei abgesetzt, so daß ein Verhaken hinter der Bohrung des Pfostenprofils erfolgt. Am gegenüberliegenden Ende des Pfostens befindet sich von der Glasebene abgewandt eine weitere Bohrung, die lediglich in einen zylindrischen Kopf eines Stellbolzens eingreift, um ein Verdrehen des Riegels zu vermeiden. Hieran ist problematisch, daß beim Montieren der Fassade ein Riegel ohne weiteres durch Druck von unten aus seiner Halteposition herausgebracht wird und die Bauteile ungesichert auseinanderfallen können.

Die US-A-4 683 693 zeigt, daß sich Riegelprofile und Pfostenprofile im Bereich der Glasaufnahme überlappen. Dabei wird der Glasaufnahmebereich der Pfostenprofile in der Breite des Riegels ausgeklinkt, so daß die ebenfalls stirnseitig geklinkten Riegel auf dem Pfosten zur Anlage kommen. Mittels Schrauben, die Schraubbohrungen durchgreifen, erfolgt die Verbindung der Riegel- oder Pfostenprofile.

Ausgehend von dem gattungsgemäßen Stand der Technik liegt der Erfindung die Aufgabe zugrunde, eine T-Verbindung der eingangs genannten Art so zu gestalten, daß der in der Innenkammer des Sprossenprofils festzulegende Verbinder in seiner konstruktiven Ausbildung unabhängig von dem Querschnitt der Innenkammer ist.

Diese Aufgabe wird erfindungsgemäß durch der Gegenstand des Anspruchs 1 gelöst.

Der Formkörper des Verbinders wird vorzugsweise ein Bauteil aus Leichtmetall-, Druckguß- bzw. Strangpreßprofilabschnitten sein oder aus Kunststoff gefertigt.

Die Verankerungsprofile, die an oder in der Nähe der äußeren Wand der Innenkammer vorgesehen sind, können als Schraubnuten, die von einem Steg getragen werden oder als Randstege einer Verankerungsnut ausgebildet sein.

Weitere Merkmale der Erfindung ergeben sich aus den übrigen Unteransprüchen.

Ausführungsbeispiele der erfindungsgemäßen T-Verbindung bzw. des erfindungsgemäßen Verbinders sind in den Zeichnungen dargestellt und werden im folgenden beschrieben.

Es zeigen:
- Fig. 1: in perspektivischer Darstellung ein Sprossenprofil mit eingesetztem Verbinder,
- Fig. 2: das Sprossenprofil nach der Fig. 1 mit zugeordneter Isolierverglasung und zugeordneter Abdeckleiste im Schnitt,
- Fig. 3: eine weitere Ausführungsform des Sprossenprofils mit eingesetztem Verbinder im Schnitt,
- Fig.3.1 u. 3.2: konstruktive Details für die Ausführung nach Fig. 3 im Schnitt,
- Fig. 4 u. 5: weitere Ausführungsbeispiele für Sprossenprofile mit den zugeordneten Bauteilen einer Glasfassade im Schnitt,
- Fig. 6: in perspektivischer Darstellung zwei T-Verbindungen zwischen Sprossenprofilen und einem Pfostenprofil, und zwar in demontiertem Zustand,

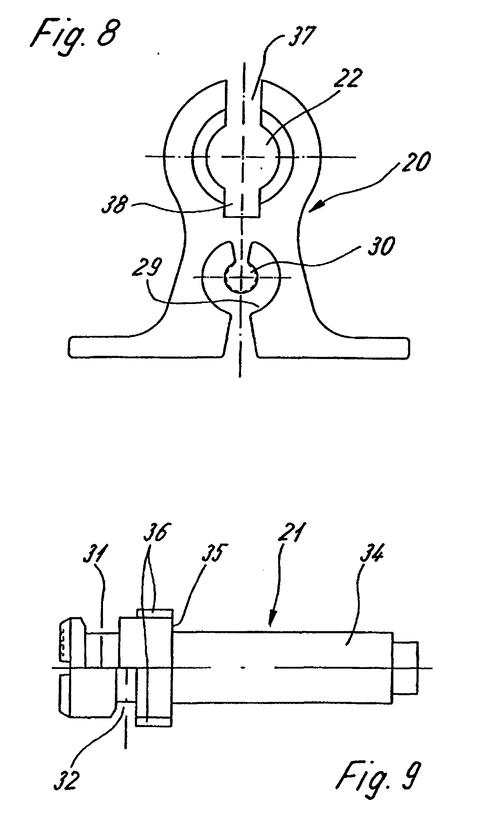

- Fig. 7: einen Verbinder entsprechend der Fig. 6 in der Montageendstellung,
- Fig. 8: den Formkörper eines Verbinders im Aufriß,
- Fig. 9: einen Bundbolzen für den Formkörper nach der Fig. 8 im Grundriß,
- Fig. 10: eine weitere Ausführungsform eines Formkörpers eines Verbinders, aufgeschoben auf eine Schraubnut,
- Fig. 11: einen Schnitt nach der Linie XI-XI in Fig. 10,
- Fig. 12: eine weitere Ausführungsform eines Formkörpers eines Verbinders aufgeschoben auf eine Schraubnut,
- Fig. 13: einen Schnitt nach der Linie XIII-XIII in Fig. 12,
- Fig. 14: eine T-Verbindung zwischen Sprossenprofilen und einem Pfostenprofil in perspektivischer Darstellung, in demontiertem Zustand, bei der die Formkörper der Verbinder mit dem Bundbolzen einstückig sind,
- Fig. 15: einen Verbinder nach der Fig. 14 nach seiner Endmontage in der Innenkammer eines Sprossenprofils,
- Fig. 16: den Verbinder nach den Fig. 14 und 15 im Aufriß,
- Fig. 17: eine Ansicht in Richtung des Pfeiles XVII in Fig. 16 und
- Fig. 18: den zu Fig. 16 gehörenden Grundriß.

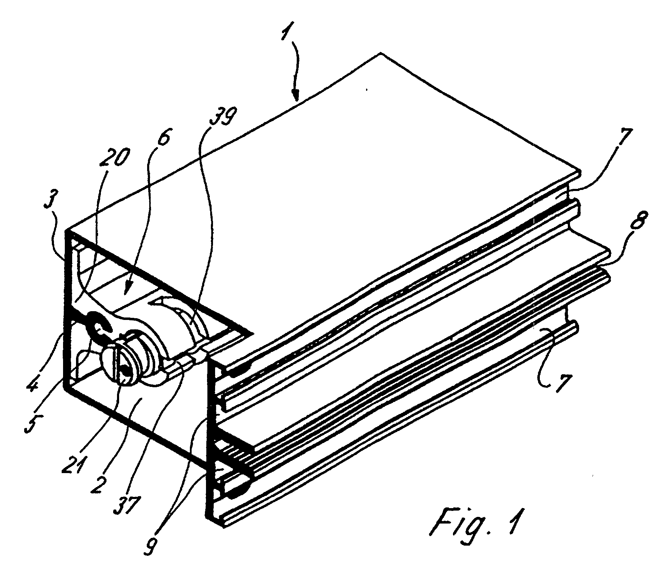

In der Fig. 1 ist ein Sprossenprofil 1 dargestellt, das eine Innenkammer 2 aufweist. Ausgehend von einer äußeren Wand 3 erstreckt sich in die Innenkammer ein Steg 4, der einen Schraubkanal 5 trägt. Der Steg 4 und der Schraubkanal 5 bilden ein sich über die gesamte Länge des Sprossenprofils 1 erstreckendes Verankerungsprofil für einen Verbinder 6, der am Stirnende des Sprossenprofils angeordnet ist, das einem Pfostenprofil zugewandt ist.

Das Sprossenprofil ist mit Verankerungsnuten 7 für Dichtungsleisten ausgerüstet und mit einer Schraubnut 8 versehen, wobei zwischen der Schraubnut 8 und den Verankerungsnuten 7 Aufnahmenuten 9 für Sickerwasser vorgesehen sind.

Die Sprossenprofile weisen an der dem Pfostenprofil 10 der Fassade oder des Lichtdaches zugewandten Stirnseite eine Ausklinkung 11 auf, die derart ausgebildet ist, daß der Boden 12 der Verankerungsnuten 7 und der Aufnahmenut 9 für Sickerwasser auf den Randleisten 13, 14 einer Verankerungsnut 15 des Pfostenprofils 10 für eine Dichtungsleiste aufgelagert werden kann. Der stirnseitig vorspringende Teil des Bodens 12 des Sprossenprofils 1, der die Verankerungsnut 15 des Pfostenprofils überlappt, wird durch Schrauben 16, deren Schäfte durch Bohrungen 17 des Sprossenprofils geführt werden, mit dem Pfostenprofil 10 verbunden.

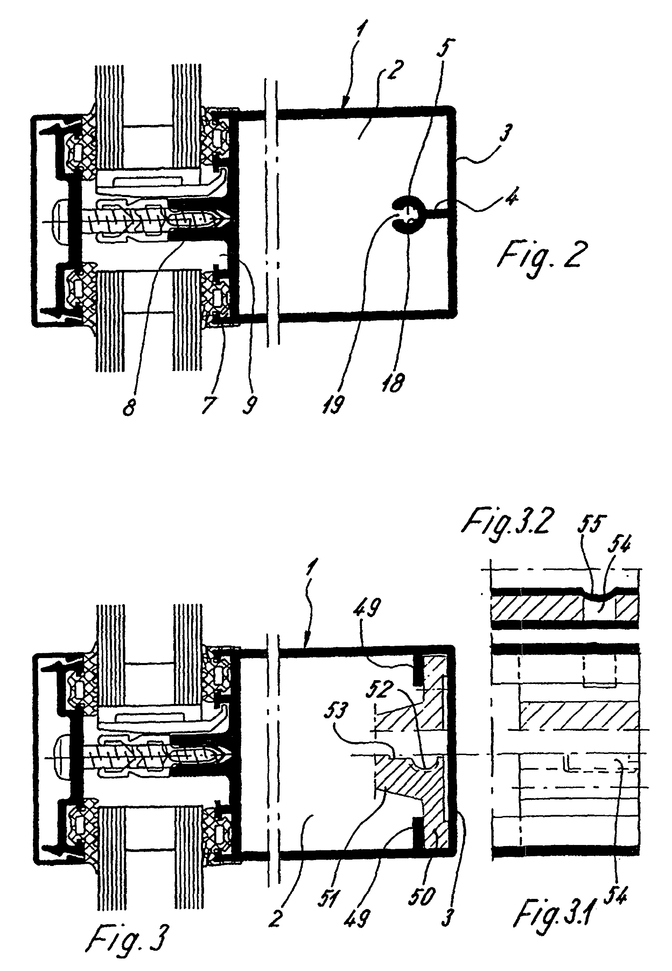

Das Sprossenprofil 1 dessen Abmessungen variiert werden können, weist bei der Ausführung nach der Fig. 2 einen Schraubkanal 5 auf, mit rundem Querschnitt, wobei leistenartige Vorsprünge 18 sich von der Wandung in den Schraubkanal erstrecken. Hierdurch läßt sich eine ein Gewinde in die Wandung des Schraubkanals prägende Schraube leichter eindrehen.

Der Schraubkanal 5 ist zu der dem Steg 4 abgewandten Seite hin durch einen Längsschlitz 19 geöffnet.

Da der Schraubkanal 5 über den Steg 4 an der äußeren Wandung 3 des Sprossenprofils festgelegt ist, hat der Verbinder 6 in der Innenkammer ausreichenden Raum zur Verfügung.

Der Schraubkanal 5 wird zur form- und kraftschlüssigen Festlegung des Verbinders benutzt.

Da sich der Schraubkanal 5 mit seiner Stirnfläche nach der Montage des Sprossenprofils an einer Wandung des Pfostenprofils 10 anliegt, kann bei einem in Längsrichtung geteilten Pfosten, der mit einem Dehnungsstoß versehen ist, dieser Schraubkanal auch zu einer unmittelbaren Verschraubung des Sprossenprofils mit dem Pfostenprofil verwendet werden.

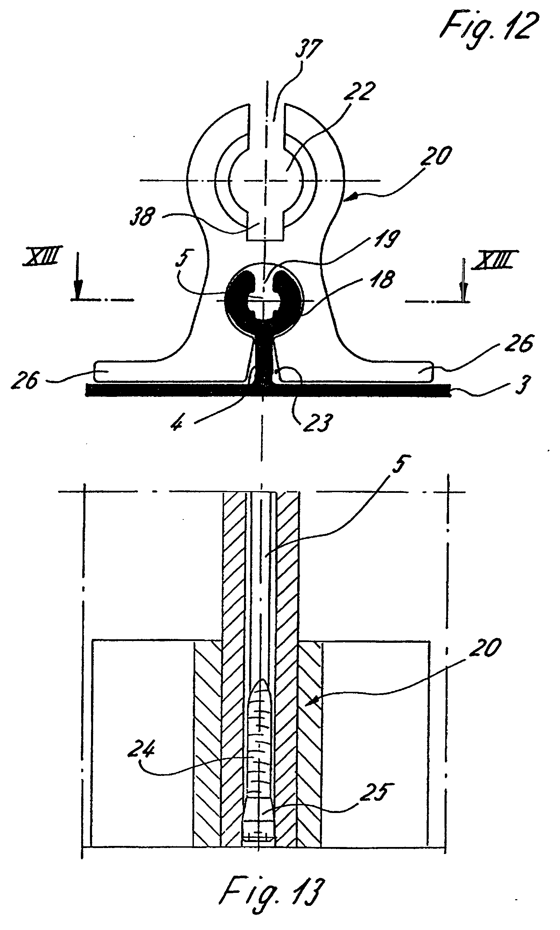

Die Festlegung eines Verbinders 6 an dem Verankerungsprofil aus dem Steg 4 und dem Schraubkanal 5 ist in den Fig. 12 und 13 dargestellt.

Der Verbinder 6 weist einen Formkörper 20 und einen Bundbolzen 21 auf, der in einer Aufnahme 22 des Formkörpers 20 gleitbar gelagert ist.

Der Formkörper 20 ist ferner mit einer Aussparung 23 ausgerüstet, die in ihrer Innenkontur der Außenkontur des aus dem Schraubkanal 5 und dem Steg 4 bestehenden Verankerungsprofil entspricht.

Der Formkörper 20 wird zur zweidimensionalen Festlegung auf das Verankerungsprofil 4, 5 geschoben und in der stirnseitigen Lage kraftschlüssig fixiert. Zu diesem Zweck wird in den Schraubkanal 5 ein Gewindestift 24 eingeschraubt, der bei der Ausführungsform nach der Fig. 13 benachbart dem Betätigungsende mit einem Konus 25 versehen ist. Durch diesen Konus erfolgt eine Aufspreizung der Wandungen des Schraubkanals 5, die dann kraftschlüssig sich an die benachbarten Flächen des Formkörpers anlegen.

Der Formkörper 20 ist mit Bodenplatten 26 ausgestattet, die sich an der Innenfläche an der Wand 3 abstützen können.

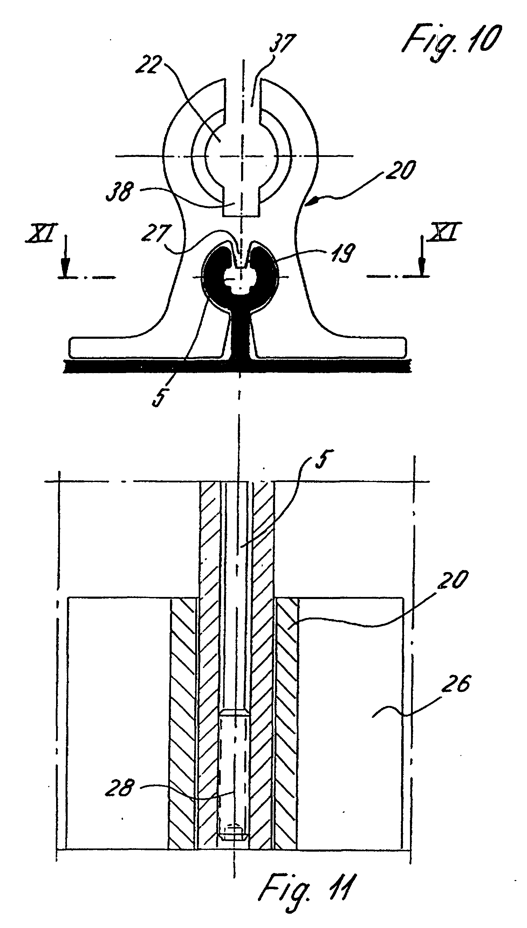

Der Formkörper 20 des Verbinders ist bei dem Ausführungsbeispiel nach den Fig. 10 und 11 dahingehend abgeändert, daß ein Steg 27 in den Längsschlitz 19 des Schraubkanals 5 eingreift und sich bis in den Schraubkanal erstreckt. Beim Eindrehen eines Gewindestiftes 28 in den Schraubkanal wird das Gewinde nicht nur in die Seitenwandungen des Schraubkanals sondern auch in den endseitigen Bereich des Steges 27 eingeprägt. Hierdurch werden die genannten Teile formschlüssig zueinander fixiert.

Bei dem Ausführungsbeispiel nach der Fig. 8 weist der Formkörper 20 des Verbinders eine Aussparung 29 auf, die in ihrer Kontur dem Schraubkanal 5 und dem Steg 4 entspricht. Diese Teile können von der Aussparung formschlüssig aufgenommen werden. Der Formkörper 20 ist ferner mit einer kreisförmigen mittigen Leiste 30 ausgerüstet, die in den Schraubkanal eingeführt werden kann. Diese Leiste 30 ist konisch ausgebildet und verjüngt sich zum Einführende hin. Durch ein Eintreiben dieser Leiste 30 in den Schraubkanal wird der Formkörper 20 kraftschlüssig im Sprossenprofil festgelegt.

Der in der Aufnahme 22 des Formkörpers 20 gelagerte Bundbolzen 21 ist in der Fig. 9 dargestellt.

Der Kopf des Bundbolzens 21 weist versetzte Rastausnehmungen 31, 32 auf, mit denen ein formschlüssiger Eingriff in die Bohrung 33 des Pfostenprofils 10 vorgenommen werden kann. Der Bundbolzen ist mit einem zylindrischen Schaft 34 ausgerüstet, der von einer zylindrischen Schraubenfeder umschlossen wird, die sich an einer Ringfläche 35 mit einem Ende abstützt, während das andere Ende an einer Fläche des Formkörpers 20 anliegt.

Benachbart der Ringfläche 35 sind diametral gegenüberliegende Führungsausleger 36 vorgesehen, von denen der eine in einen Längsschlitz 37 im oberen Scheitelbereich des Formkörpers 20 und der andere Führungsausleger in eine Führungsnut 38 eingreifen. Durch diese Führungsmittel wird der Bundbolzen in der Aufnahme 22 des Formkörpers bei axialen Bewegungen verdrehungssicher geführt.

Der Formkörper 20 weist ferner eine dem Längsschlitz 37 und die Führungsnut 38 verbindende Quernut 39 auf.

Beim Zurückdrücken des Bundbolzens 21 gelangen die Führungsausleger 36 in den Bereich der Quernut 39, in die die Führungsausleger eingeschwenkt werden können.

Es besteht somit die Möglichkeit den Verbinder auf eine Lage einzustellen, bei der im Verbindungsbereich noch die Anordnung einer Dichtungsmanschette möglich ist.

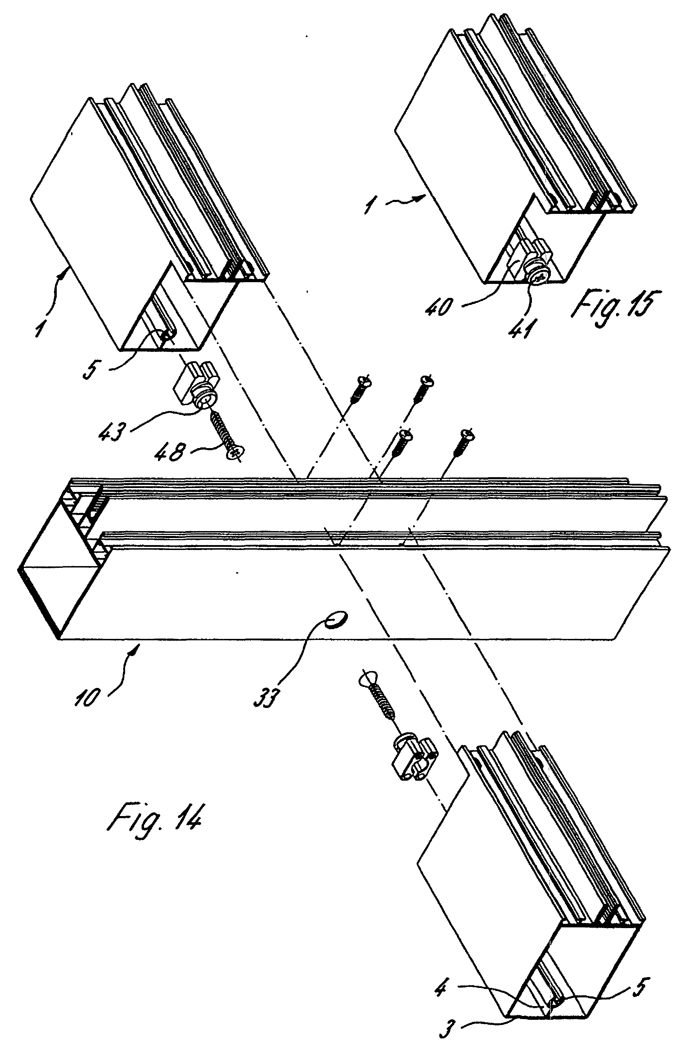

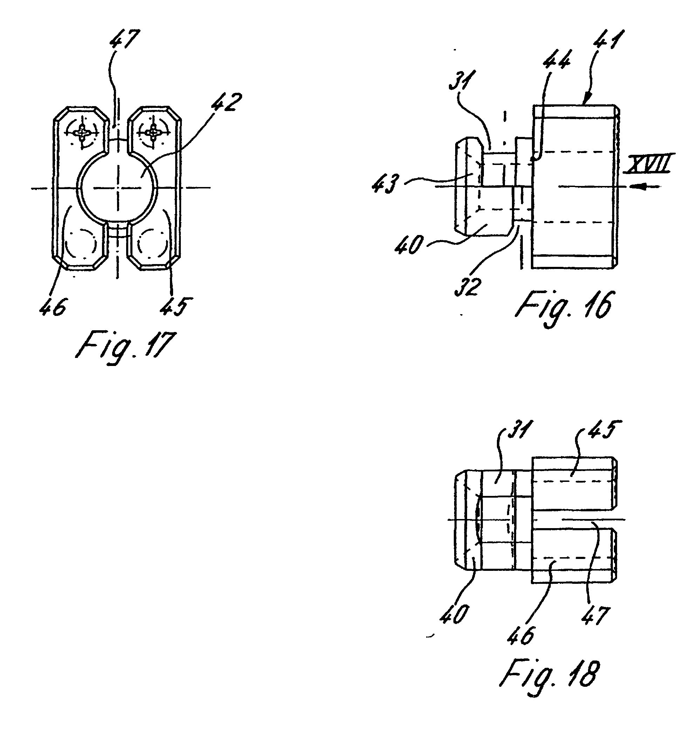

Bei dem Ausführungsbeispiel nach den Fig. 14 bis 18 ist der Bundbolzen 40 mit dem Formkörper 41 einstückig aus Kunststoff gefertigt. Der Bundbolzen 40 und der Formkörper 41 weisen einen mittigen im Querschnitt runden Kanal 42 auf, der im Bundbolzen 40 von einer Senkkopfaufnahme 43 ausgeht. Der Kanal 42 ist im Durchmesser gestuft ausgeführt, so daß eine Anlagefläche 44 vorhanden ist gegen die sich die Stirnseite der Schraubnut 5 stützt, wenn der Formkörper auf die Schraubnut geschoben wird.

Der Durchmesser des Kanals 42 im Bereich des Formkörpers 41 entspricht der Außenkontur des Schraubkanals 5.

Der Formkörper 41 wird durch zwei Ausrichtausleger 45, 46 gebildet, die einen mittigen Spalt 47 begrenzen. Der Spalt 47 erstreckt sich über die gesamte Bauhöhe des Formkörpers 41. Der Spalt 47 entspricht in seiner Breite dem Steg 4 des Sprossenprofils, der mit der Schraubnut 5 einstückig ist.

Der Verbinder kann somit um 180 Grad umgesteckt werden, so daß die Rastausnehmungen 31 und 32 in die gewünschte Raststellung gebracht werden können, um eine formschlüssige Verbindung mit dem Pfostenprofil vorzunehmen. Sofern die Rastaussparung 31 den Rand der Bohrung 33 des Pfostenprofils 10 hintergreift, kann zwischen dem Sprossenprofil 1 und dem Pfostenprofil 10 eine Dichtungsmanschette angeordnet werden.

Zur Festlegung des einstückigen Verbinders nach den Fig. 14 bis 18 an dem Schraubkanal 5 des Sprossenprofils 1 wird der Formkörper 41 auf den Schraubkanal 5 geschoben bis die Stirnfläche des Schraubkanals 5 an der Fläche 44 anliegt. Dann wird eine Schraube 48 in den mittigen Kanal des Verbinders eingeführt und der Gewindeschaft der Schraube in den Schraubkanal 5 eingedreht. Hierdurch ergibt sich eine form- und kraftschlüssige Verbindung zwischen den genannten Teilen.

In der Innenkammer 2 des Sprossenprofils 1 können als Verankerungsprofile für den Verbinder Randleisten 49 vorgesehen werden, die parallel zur äußeren Wand 3 verlaufen und mit der äußeren Wand eine Verankerungsnut für eine Grundplatte 50 des Formkörpers 51 bilden. Die Grundplatte 50 kann in die Verankerungsnut mit geringem Übermaß eingetrieben werden, um den Formkörper gegen eine Verschiebung in der Längsrichtung der Nut zu sichern.

Es ist auch möglich, die Grundplatte mit einer Konizität, und zwar mit einer Verjüngung zum Einführungsende hin zu versehen, wobei die Konizität so ausgebildet ist, daß eine Festlegung des Formkörpers in der Montageendstellung erfolgt.

Eine weitere Möglichkeit einer form- und kraftschlüssigen Verbindung kann so vorgenommen werden, daß im Fußbereich des Formkörpers 51 eine Bohrung 52 und ein in die Bohrung einmündender Schlitz 53 vorgesehen werden. Zur Festlegung des Fußbereichs des Formkörpers 51 wird in die Bohrung 52 eine Spreizschraube 54 eingeschraubt oder ein Stift in die Bohrung eingeschlagen.

Durch die Spreizung des Formkörpers im Fußbereich wird die angestrebte form- und kraftschlüssige Festlegung gegenüber dem Sprossenprofil 1 erreicht

Die Grundplatte 50 kann auch, wie in der Fig. 3.2 dargestellt, mit einer oder mehreren Ausnehmungen 54 versehen werden, in die dann Material 55 des Randsteges 49 eingeformt wird.

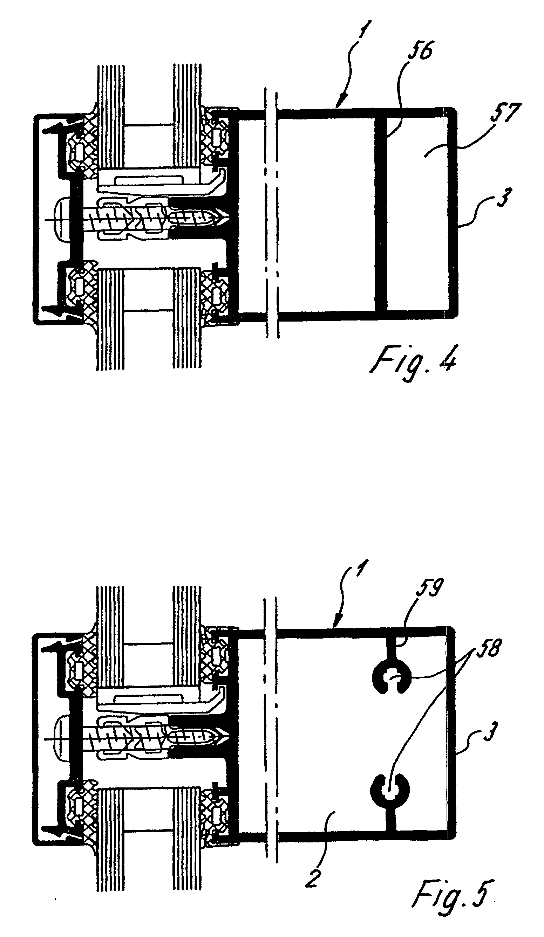

Die Fig. 4 zeigt eine weitere Ausführungsform eines Sprossenprofils 1. Bei dieser Ausführungsform ist eine parallel zur äußeren Wand 3 verlaufende Trennwand 56 vorgesehen, durch die eine Kammer 57 zur Festlegung eines Verbinders erzielt wird. Der Befestigungsfuß des Verbinders, der in seinem Querschnitt dem Querschnitt der Kammer 57 entspricht, wird in die Kammer eingeschoben, so daß eine formschlüssige Festlegung in zwei Dimensionen gegeben ist. Die Festlegung in der Längsrichtung der Kammer kann durch Verbindungselemente oder durch einen Kraft- und/oder Formschluß erzielende Mittel oder durch einen Kleber vorgenommen werden.

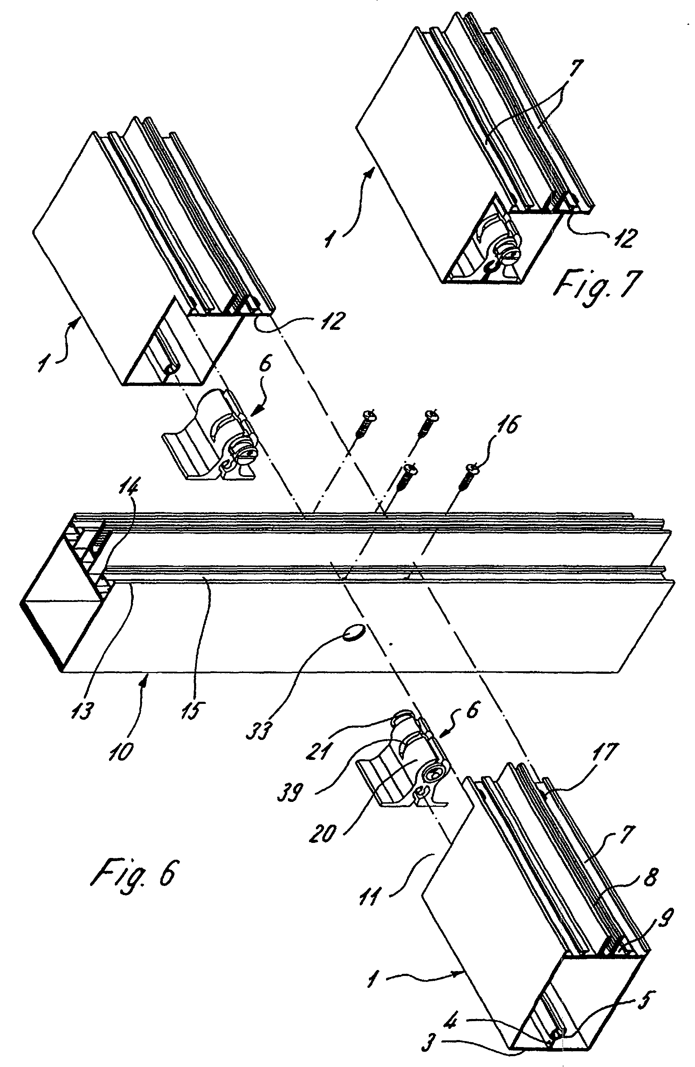

In der Fig. 5 ist ein Sprossenprofil 1 aufgezeigt, das zweieinander gegenüberliegende Schraubkanäle 58 aufweist, die einstückig mit Stegen 59 sind, die parallel zur äußeren Wand 3 verlaufen. Diese gegenüberliegenden Schraubkanäle ermöglichen eine formschlüssige Festlegung des Formkörpers eines Verbinders, und zwar einzeln oder gemeinsam, ohne daß Befestigungsmittel durch die Wandungen des Sprossenprofils geführt werden müssen.

## Patentansprüche

1. T-Verbindung zwischen einem Sprossen- und einem Pfostenprofil einer Fassade oder eines Lichtdaches, wobei das Sprossenprofil (1) an der dem Pfostenprofil (10) zugewandten Stirnseite eine Ausklinkung (11) aufweist, die derart ausgebildet ist, daß ein Boden (12) von Verankerungsnuten (7) und einer Aufnahmenut (9) für Sickerwasser auf Randleisten (13, 14) einer Verankerungsnut (15) des Pfostenprofils (10) für eine Dichtungsleiste aufgelagert ist, wobei ein stirnseitig vorspringender Teil des Bodens (12) des Sprossenprofils (1), welcher die Verankerungsnut (15) des Pfostenprofils (10) überlappt, durch Schrauben (16), deren Schäfte durch Bohrungen (17) des Sprossenprofils (1) geführt sind, mit dem Pfostenprofil (10) verbunden ist, wobei das Sprossenprofil und das Pfostenprofil je eine Innenkammer (2) aufweisen und in der Innenkammer (2) des Sprossenprofils (1) an der der Verbindungsfuge zugewandten Stirnseite ein Verbinder (6; 40, 41) festgelegt ist, der über die Verbindungsfuge am Pfostenprofil an- bzw. eingreift, **dadurch gekennzeichnet, daß** der Verbinder (6, 40, 41) sich nur über einen Teil des Querschnitts der Innenkammer (2) des Sprossenprofils (1) erstreckt, aus einem Formkörper (20, 41) besteht, und der Formkörper (20, 41) an in der Nähe der in montierten Zustand äußeren, parallel zur Scheiben- oder Füllungsplattenebene verlaufenden Wand (3) des Sprossenprofils (1) angeordneten Verankerungsprofilen (4, 5; 49; 56; 58; 59) festgelegt ist.

2. T-Verbindung nach Anspruch 1, **dadurch gekennzeichnet, daß** der Formkörper (20, 41) aus elastischem Kunststoff oder aus Metall, vorzugsweise aus Leichtmetall gefertigt ist.

3. T-Verbindung nach Anspruch 1, **dadurch gekennzeichnet, daß** die Innenkammer (2) des Sprossenprofils (1) als Verankerungsprofil einen von der äußeren Wand (3) ausgehenden Steg (4) aufweist, der mit einem Schraubkanal (5) einstückig ist, der an der dem Steg abgewandten Seite mit einem Längsschlitz (19) versehen ist und der Formkörper den Schraubkanal und den Steg formschlüssig umgreift.

4. T-Verbindung nach Anspruch 3, **dadurch gekennzeichnet, daß** zur kraftschlüssigen Festlegung des Formkörpers (20) ein die Wandungen des Schraubkanals (5) spreizender Gewindestift (24, 28) eingeschraubt ist.

5. T-Verbindung nach Anspruch 4, **dadurch gekennzeichnet, daß** der Gewindestift (24) benachbart dem Betätigungsende mit einem Konus (25) versehen ist.

6. T-Verbindung nach Anspruch 3, **dadurch gekennzeichnet, daß** der Formkörper (20) einen Steg (27) aufweist, der in den Längsschlitz (19) des Schraubkanals (5) eingreift, sich bis in den Schraubkanal (5) erstreckt und durch den Gewindestift (28) auch ein Gewinde in den endseitigen Teil des Steges (27) eingeprägt wird.

7. T-Verbindung nach Anspruch 3, **dadurch gekennzeichnet, daß** der Formkörper (20) eine Aussparung (29) aufweist, die in ihrer Kontur dem Schraubkanal (5) und dem Steg (4) entspricht, diese Teile formschlüssig aufnimmt und eine kreisförmige, mittige Leiste (30) des Formkörpers (20) in den Schraubkanal einführbar und in Längsrichtung konisch ausgebildet ist und sich zum Einführende hin verjüngt.

8. T-Verbindung nach Anspruch 1, **dadurch gekennzeichnet, daß** der Formkörper (20) im oberen Scheitelbereich mit einem Längsschlitz (37) versehen ist, der in eine Aufnahme (22) für einen zylindrischen Schaft (34) eines Bundbolzens (21,40) einmündet und der Bundbolzen sich mit einer Ringfläche (35) an einer den Schart (34) des Bundbolzens umgreifenden Feder abstützt.

9. T-Verbindung nach Anspruch 8, **dadurch gekennzeichnet, daß** der Bundbolzen (21) bei axialen Bewegungen verdrehungssicher in der Aufnahme (22) des Formkörpers (20) geführt ist.

10. T-Verbindung nach Anspruch 9, **dadurch gekennzeichnet, daß** der Bundbolzen Führungsausleger (36) aufweist, die in den oberen Längsschlitz (37) und in eine untere Führungsnut (38) eingreifen.

11. T-Verbindung nach Anspruch 10, **dadurch gekennzeichnet, daß** der Formkörper (20) eine die Führungsnut (38) und den Längsschlitz (37) verbindende Quernut (39) aufweist, in die die Führungsausleger (36) einschwenkbar sind.

12. T-Verbindung nach Anspruch 3, **dadurch gekennzeichnet, daß** ein mit dem Formkörper (41) einstückige Bundbolzen (40) eine Senkkopfaufnahme (43) für eine Schraube aufweist, die durch einen Kanal (42) des Formkörpers in die vom Formkörper formschlüssig umgriffene Schraubkanal mit ihrem Gewindeschaft einschraubbar ist.

13. T-Verbindung nach Anspruch 12, **dadurch gekennzeichnet, daß** der Bundbolzen (40) eine Ringfläche (44) für die Anlage an der Stirnseite der Schraubkanal (5) aufweist, von der sich Ausrichtausleger (45, 46) erstrecken, die einen mittigen Spalt (47) begrenzen, der sich über die gesamte Bauhöhe des Formkörpers (41) erstreckt und in seiner Breite größer ist als die Dicke des Steges (4).

14. T-Verbindung nach Anspruch 13, **dadurch gekennzeichnet, daß** der Formkörper (41) auf der vom Steg (4) getragenen Schraubkanal (5) um 180 Grad umsteckbar ist.

15. T-Verbindung nach Anspruch 1, **dadurch gekennzeichnet, daß** die äußere Wand (3) des Sprossenprofils (1) zusammen mit zwei parallel verlaufenden Randleisten (49) eine Verankerungsnut für eine Grundplatte (50) des Formkörpers (51) bilden.

16. T-Verbindung nach Anspruch 15, **dadurch gekennzeichnet, daß** die Grundplatte (50) mit geringem Übermaß in die Verankerungsnut eintreibbar ist.

17. T-Verbindung nach Anspruch 15, **dadurch gekennzeichnet, daß** die Grundplatte (50) konisch sich zum Einführende hin verjüngt.

18. T-Verbindung nach Anspruch 15, **dadurch gekennzeichnet, daß** der Formkörper (51) eine Bohrung (52) und einen in die Bohrung einmündenden Schlitz (53) aufweist und in die Bohrung ein Spreizmittel einschraubbar oder eintreibbar ist.

19. T-Verbindung nach Anspruch 15, **dadurch gekennzeichnet, daß** die Grundplatte (50) mindestens eine Ausnehmung (54) aufweist, in die Material (55) der Randleisten (49) eingeformt ist.

20. T-Verbindung nach Anspruch 1, **dadurch gekennzeichnet, daß** das Sprossenprofil (1) eine parallel zur äußeren Wand (3) verlaufende Trennwand (56) aufweist, die eine Kammer (57) zur Festlegung des Formkörpers eines Verbinders bildet.

21. T-Verbindung nach Anspruch 1, **dadurch gekennzeichnet, daß** als Verankerungsprofile in der Innenkammer (2) des Sprossenprofils (1) zwei einander gegenüberliegende Schraubkanäle (58) vorgesehen sind, die mit Stegen (59) einstückig sind, die parallel zur äußeren Wand (3) verlaufen.

22. T-Verbindung nach Anspruch 1, **dadurch gekennzeichnet, daß** der Formkörper (20,41) mit eingelegtem oder mit diesem einstückigausgelegtem Bundbolzen ausgerüstet ist.

## Claims

1. T-connection between a crossmember profile and a post profile of a facade or a glazed roof, it being the case that, on the end side which is directed towards the post profile (10), the crossmember profile (1) has a notched portion (11) which is designed such that a base (12) of anchoring grooves (7) and of a receiving groove (9) for seepage water is mounted on border strips (13, 14) of an anchoring groove (15) of the post profile (10) for a sealing strip, it being the case that an end projecting part of the base (12) of the crossmember profile (1), which overlaps the anchoring groove (15) of the post profile (10), is connected to the post profile (10) by screws (16), of which the shanks are guided through bores (17) of the crossmember profile (1), and it being the case that the crossmember profile and the post profile each have an inner chamber (2), and secured in the inner chamber (2) of the crossmember profile (1), on the end side which is directed towards the connecting joint, is a connector (6; 40, 41) which acts on, or engages in, the post profile via the connecting joint, **characterized in that** the connector (6, 40, 41) only extends over part of the cross section of the inner chamber (2) of the crossmember profile (1), and comprises a shaped body (20, 41), and the shaped body (20, 41) is secured on anchoring profiles (4, 5; 49; 56; 58; 59) which are arranged in the vicinity of the wall (3) of the crossmember profile (1), said wall being on the outside in the installed state and running parallel to the glazing-panel or filling-panel plane.

2. T-connection according to Claim 1, **characterized in that** the shaped body (20, 41) is produced from elastic plastics material or from metal, preferably from light metal.

3. T-connection according to Claim 1, **characterized in that** the inner chamber (2) of the crossmember profile (1) has, as anchoring profile, a web (4) which extends from the outer wall (3), and is integral with a screw-connection channel (5) which, on the side which is directed away from the web, is provided with a longitudinal slot (19), and the shaped body engages in a form-fitting manner around the screw-connection channel and the web.

4. T-connection according to Claim 3, **characterized in that**, in order to secure the shaped body (20) in a force-fitting manner, a threaded pin (24, 28) which expands the walls of the screw-connection channel (5) is screwed in.

5. T-connection according to Claim 4, **characterized in that** the threaded pin (24) is provided with a cone (25) adjacent to the actuating end.

6. T-connection according to Claim 3, **characterized in that** the shaped body (20) has a web (27) which engages in the longitudinal slot (19) of the screw-connection channel (5) and extends into the screw-connection channel (5), and the threaded pin (28) also impresses a thread in the end part of the web (27).

7. T-connection according to Claim 3, **characterized in that** the shaped body (20) has a cutout (29) which corresponds, in terms of contour, to the screw-connection channel (5) and the web (4) and accommodates these parts in a form-fitting manner, and a circular, central strip (30) of the shaped body (20) can be introduced into the screw-connection channel, is of conical design in the longitudinal direction and tapers in the direction of the introduction end.

8. T-connection according to Claim 1, **characterized in that** the shaped body (20) is provided, in the top vertex region, with a longitudinal slot (37) which opens out into a mount (22) for a cylindrical shank (34) of a collared stud (21, 40), and the collared stud is supported, by way of an annular surface (35), on a spring which engages around the shank (34) of the collared stud.

9. T-connection according to Claim 8, **characterized in that**, in the case of axial movements, the collared stud (21) is guided in a rotationally secure manner in the mount (22) of the shaped body (20).

10. T-connection according to Claim 9, **characterized in that** the collared stud has guide extensions (36) which engage in the top longitudinal slot (37) and in a bottom guide groove (38).

11. T-connection according to Claim 10, **characterized in that** the shaped body (20) has a transverse groove (39) which connects the guide groove (38) and the longitudinal slot (37) and into which the guide extensions (36) can be pivoted.

12. T-connection according to Claim 3, **characterized in that** a collared stud (40), which is integral with the shaped body (41), has a countersunk-head socket (43) for a screw which can be screwed, by way of its threaded shank, through a channel (42) of the shaped body into the screw-connection channel around which the shaped body engages in a form-fitting manner.

13. T-connection according to Claim 12, **characterized in that** the collared stud (40) has an annular surface (44) for abutment against the end side of the screw-connection channel (5), aligning extensions (45, 46) extending from said annular surface and bounding a central gap (47) which extends over the entire overall height of the shaped body (41) and the width of which is greater than the thickness of the web (4).

14. T-connection according to Claim 13, **characterized in that** the shaped body (41) can be refitted on the screw-connection channel (5), borne by the web (4), once it has been turned through 180 degrees.

15. T-connection according to Claim 1, **characterized in that** the outer wall (3) of the crossmember profile (1) together with two parallel border strips (49) form an anchoring groove for a base plate (50) of the shaped body (51).

16. T-connection according to Claim 15, **characterized in that** it is possible for the base plate (50), with a slight oversize, to be driven into the anchoring groove.

17. T-connection according to Claim 15, **characterized in that** the base plate (50) tapers conically in the direction of the introduction end.

18. T-connection according to Claim 15, **characterized in that** the shaped body (51) has a bore (52) and a slot (53), which opens out into the bore, and an expanding means can be screwed or driven into the bore.

19. T-connection according to Claim 15, **characterized in that** the base plate (50) has at least one recess (54), in which material (55) of the border strips (49) is formed.

20. T-connection according to Claim 1, **characterized in that** the crossmember profile (1) has a partition wall (56) which runs parallel to the outer wall (3) and forms a chamber (57) for securing the shaped body of a connector.

21. T-connection according to Claim 1, **characterized in that** provided as anchoring profiles in the inner chamber (2) of the crossmember profile (1) are two mutually opposite screw-connection channels (58), which are integral with webs (59) running parallel to the outer wall (3).

22. T-connection according to Claim 1, **characterized in that** the shaped body (20, 41) is provided with an inserted collar stud or with a collared stud which is integral therewith.

## Revendications

1. Assemblage en T entre un profilé de meneau et un profilé de montant d'une façade ou d'une toiture lumineuse, le profilé de meneau (1) présentant du côté frontal tourné vers le profilé de montant (10) une encoche (11) qui est conformée de telle manière qu'un fond (12) de rainures d'ancrage (7) et d'une rainure de réception (9) pour des eaux d'infiltration est appuyé sur des barres de bord (13, 14) d'une rainure d'ancrage (15) du profilé de montant (10) pour une baquette d'étanchéité, une partie en saillie frontale du fond (12) du profilé de meneau (1), qui recouvre la rainure d'ancrage (15) du profilé de montant (10), étant relié au profilé de montant (10) par des vis (6) dont les tiges passent par des perçages (17) du profilé de meneau (1), le profilé de meneau et le profilé de montant présentant chacun une chambre intérieure (2) un connecteur (6 ; 40 ; 41) étant fixé dans la chambre intérieure (2) du profilé de meneau (1) sur la face frontale tourne vers le joint d'assemblage, connecteur qui se met en prise ou s'engage sur le profilé de montant par-delà le joint de liaison, **caractérisé en ce que** le connecteur (6, 40, 41) ne s'étend que sur une partie de la section de la chambre intérieure (2) du profilé de meneau (1), est composé d'un corps moulé (20, 41) et le corps moulé (20, 41) est fixé sur des profilés d'ancrage (4, 5 ; 49 ; 56 ; 58 ; 59) placés à proximité de la paroi (3) du profilé de meneau (1) extérieure à l'état monté et s'étendant parallèlement au plan des plaques ou des dalles de remplissage.

2. Assemblage en T selon la revendication 1, **caractérisé en ce que** le corps moulé (20, 41) est fabriqué en matière plastique élastique ou en métal, de préférence en alliage léger.

3. Assemblage en T selon la revendication 1, **caractérisé en ce que** la chambre intérieure (2) du profilé de meneau (1) présente en tant que profilé d'ancrage une barre (4) partant de la paroi extérieure (3), qui est solidaire d'un canal de vissage (5) qui est muni d'une fente longitudinale (19) du côté opposé à la barre et le corps moulé enserre le canal de vissage et la barre par adhérence.

4. Assemblage en T selon la revendication 3, **caractérisé en ce que**, pour l'immobilisation par engagement positif du corps moulé (20), une tige filetée (24, 28) écartant les parois du canal de vissage (5) est vissée.

5. Assemblage en T selon la revendication 4, **caractérisé en ce que** la tige filetée (24) est munie d'un cône (25) au voisinage de l'extrémité de manoeuvre.

6. Assemblage en T selon la revendication 3, **caractérisé en ce que** le corps moulé (20) présente une barre (27) qui s'engage dans la fente longitudinale (19) du canal de vissage, s'étend jusque dans le canal de vissage (5) et un filetage est également marqué par la tige filetée (28) dans la partie d'extrémité de la barre (27).

7. Assemblage en T selon la revendication 3, **caractérisé en ce que** le corps moulé (20) présente un évidement (29) dont le contour correspond au canal de vissage (5) et à la barre (4), qui reçoit ces pièces par adhérence, et une baguette centrale circulaire (30) du corps moulé (20) peut être introduite dans le canal de vissage et est conformé conique dans la direction longitudinale et s'effile en direction de l'extrémité d'introduction.

8. Assemblage en T selon la revendication 1, **caractérisé en ce que** le corps moulé (20) est muni dans la partie supérieure de sommet d'une fente longitudinale (37) qui débouche dans un logement (22) pour une tige cylindrique (34) d'un boulon à collet (21) et le boulon à collet s'appuie avec une surface annulaire (35) sur un ressort enserrant la tige (34) du boulon à collet.

9. Assemblage en T selon la revendication 8, **caractérisé en ce que** le boulon à collet (21) est guidé dans le logement (22) du corps moulé (20) de manière immobile en rotation en cas de mouvements axiaux.

10. Assemblage en T selon la revendication 9, **caractérisé en ce que** le boulon à collet présente des consoles de guidage (36) qui s'engagent dans la fente longitudinale supérieure (37) et dans une rainure de guidage inférieure (38).

11. Assemblage en T selon la revendication 10, **caractérisé en ce que** le corps moulé (20) présente une rainure transversale (39) reliant la rainure de guidage (38) et la fente longitudinale (37), dans laquelle les consoles de guidage (36) peuvent pénétrer en pivotant.

12. Assemblage en T selon la revendication 3, **caractérisé en ce qu'**un boulon à collet (40) solidaire du corps moulé (41) présente un logement de tête fraisée (43) pour une vis qui peut se visser avec sa tige filetée à travers un canal (42) du corps moulé dans le canal de vissage enserré par adhérence par le corps moulé.

13. Assemblage en T selon la revendication 12, **caractérisé en ce que** le boulon à collet (40) présente une surface annulaire (44) pour l'appui contre la face frontale du canal de vissage (5), depuis laquelle s'étendent des consoles d'ajustement (45, 46) qui délimitent une fente centrale (47) qui s'étend sur toute la hauteur du corps moulé (41) et est d'une largeur supérieure à l'épaisseur de la barre (4).

14. Assemblage en T selon la revendication 13, **caractérisé en ce que** le corps moulé (41) peut être retourné de 180 degrés sur le canal de vissage (5) porté par la barre (4).

15. Assemblage en T selon la revendication 1, **caractérisé en ce que** la paroi extérieure (3) du profilé de meneau (1) forme avec deux baguettes de bord parallèles (49) une rainure d'ancrage pour une plaque de base (5) du corps moulé (51).

16. Assemblage en T selon la revendication 15, **caractérisé en ce que** la plaque de base (50) peut être enfoncée dans la rainure d'ancrage avec un léger excédent dimensionnel.

17. Assemblage en T selon la revendication 15, **caractérisé en ce que** la plaque de base (50) est effilée de manière conique en direction de l'extrémité d'introduction.

18. Assemblage en T selon la revendication 15, **caractérisé en ce que** le corps moulé (51) présente un perçage (52) et une fente (53) débouchant dans le perçage et des moyens d'écartement peuvent être vissés ou enfoncés dans le perçage.

19. Assemblage en T selon la revendication 15, **caractérisé en ce que** la plaque de base (50) présente au moins un évidement (54) dans laquelle est moulée de la matière (55) des baguettes de bord (49).

20. Assemblage en T selon la revendication 1, **caractérisé en ce que** le profil de meneau (1) présente une cloison (56) s'étendant parallèlement à la paroi extérieure (3), qui forme une chambre (57) pour la fixation du corps moulé d'un connecteur.

21. Assemblage en T selon la revendication 1, **caractérisé en ce qu'**il est prévu, comme profilés d'ancrage dans la chambre intérieure (2) du profilé de meneau (1), deux canaux de vissage (58) mutuellement opposés, qui sont solidaires de barres (59) qui s'étendent parallèlement à la paroi extérieure (3).

22. Assemblage en T selon la revendication 1, **caractérisé en ce que** le corps moulé (20, 41) est muni d'un boulon à collet inséré ou conformé solidaire de celui-ci.
